# EUROPÄISCHE PATENTSCHRIFT

(11) **EP 2 039 595 B1**
(45) Veröffentlichungstag und Bekanntmachung des Hinweises auf die Patenterteilung: **14.07.2010**
(21) Anmeldenummer: 08015986.6
(22) Anmeldetag: 11.09.2008
(51) Int. Cl.: B62D 35/02, B62D 37/02

(54) **Luftleitvorrichtung**
Spoiler arrangement
Dispositif déflecteur d'air

(30) Priorität: 20.09.2007 DE 102007045004
(43) Veröffentlichungstag der Anmeldung: 25.03.2009
(73) Patentinhaber: Bayerische Motoren Werke AG, 80809 München (DE)
(72) Erfinder: Dimitrou, Joannis, 85375 Neufahrn (DE); Sagan, Erich, 85716 Unterschleißheim (DE); Fallert, Jürgen, 80995 München (DE)

(56) Entgegenhaltungen:
- WO-A-02/22432
- DE-A1- 3 347 364
- FR-A- 2 575 126

## Beschreibung

Die Erfindung betrifft eine Luftleitvorrichtung für ein Fahrzeug, mit einem Radspoiler im Bereich vor einem Fahrzeugrad, nach dem Oberbegriff des Anspruchs 1. Eine derartige Luftleitvorrichtung ist beispielsweise aus der EP 1 317 373 B1 bekannt.

Radspoiler sind beispielsweise aus der FR 2 575 126 A1 und der JP 2001-233149 A1 bekannt. Die Radspoiler sind als so genannte "Staulippe" vor den Rädern angeordnet und verlaufen etwa quer zur Fahrtrichtung. Mit den Radspoilern soll die Umströmung der dahinter liegenden, sich drehenden Räder und die Durchströmung der Radhäuser gezielt so beeinflusst werden, dass sich ein verringerter Luftwiderstandsbeiwert in Fahrtrichtung ergibt.

Durch diese Beeinflussung der Strömungsverhältnisse im Bereich der Räder und Radhäuser werden jedoch die Auftriebsbeiwerte des Kraftfahrzeuges negativ beeinflusst. Außerdem entstehen durch die Radspoiler fahrzeugaußenseitig Verwirbelungen, die sich entlang der Seitenbereiche des Fahrzeuges fortsetzen und somit die Außenumströmung des Fahrzeuges negativ beeinflussen.

Aufgabe der Erfindung ist es, diese unerwünschten Auswirkungen von Radspoilern auf die Gesamtaerodynamik eines Kraftfahrzeuges zu minimieren.

Diese Aufgabe wird durch eine Luftleitvorrichtung mit den Merkmalen des Anspruchs 1 gelöst.

Kerngedanke ist es hierbei, einem bekannten Radspoiler eine Leitfinne oder mehrere Leitfinnen hinzuzufügen, wobei die Leitfinne oder die Leitfinnen etwa in Fahrtrichtung verläuft bzw. verlaufen und zu einem maßgeblichen Anteil vor dem Radspoiler angeordnet ist bzw. sind. Durch wenigstens eine derartige Leitfinne, die an den Radspoiler seitlich unmittelbar oder mit geringem Abstand angrenzt, können die durch den Radspoiler beeinflussten Strömungsverhältnisse in positiver Weise verändert werden. Durch die Leitfinne wird die Strömung im Bereich der Räder und des Radhauses "kanalisiert". Diese Kanalisierung der Strömung durch die Leitfinne ist zu unterscheiden von der aerodynamischen Wirkung des Radspoilers, die in einer Verbesserung des Druckgebietes im Bereich des Radhauses besteht. Radspoiler und Leitfinne sind so zu dimensionieren, dass eine Interaktion zwischen den beiden aerodynamischen Effekten minimiert oder nach Möglichkeit vollständig unterbunden wird.

Durch die Leitfinne wird somit der Luftwiderstandsbeiwert in Fahrzeuglängsrichtung minimiert. Außerdem werden die durch den Radspoiler entstehenden Nachteile hinsichtlich des Fahrzeugauftriebes reduziert.

Zwar weist auch die aus der EP 1 317 373 B1 bekannte Luftleitvorrichtung einen Abschnitt auf, der sich an einen vor dem Rad befindlichen Abschnitt anschließt und sich nach innen und hinten zumindest bis etwa zur senkrechten, durch die Raddrehachsen verlaufenden Radmittenebene erstreckt. Durch diese Ausgestaltung der bekannten Luftleitvorrichtung soll ein nicht unbeträchtlicher Anteil von am Unterboden des Kraftfahrzeuges entlang strömenden Schmutzpartikeln, Wassertropfen etc. um die Räder herumgeleitet und somit von den Radschüsseln abgelenkt werden, so dass Bremsenbauteile, Radführungsgelenke etc. weniger stark beaufschlagt werden. Eine Leitfinne gemäß der Erfindung, die sich in einem Bereich vor einem Radspoiler erstreckt, ist jedoch nicht vorgesehen.

In einer bevorzugten Ausgestaltung der Erfindung ist derjenige Anteil der Leitfinne, der sich vor dem Radspoiler befindet, größer als der dahinter liegende Abschnitt. In einer weiteren bevorzugten Ausführungsform der Erfindung erstreckt sich die Leitfinne ausschließlich vor dem Radspoiler. In beiden Ausführungsformen ist das Prinzip der Erfindung nach Anspruch 1 verwirklicht, wonach die Leitfinne bereits vor dem Radspoiler eine Gleichrichtung des Luftstromes im Bereich der Radhäuser bewirken soll, wodurch seitlich aus dem Radhaus austretende Verwirbelungen, die die Gesamtumströmung des Fahrzeuges stören, minimiert werden.

Vorteilhafte Ausgestaltungen der Erfindung sind Gegenstand weiterer Unteransprüche.

Mögliche Ausführungsbeispiele der Erfindung sind in der Zeichnung dargestellt und werden nachfolgend näher erläutert. Es zeigt:
- Fig. 1: eine schematische Unteransicht auf eine erfindungsgemäße Luftleitvor- richtung im Bereich vor einem linken Vorderrad eines Kraftfahrzeuges,
- Fig. 2: eine der Fig. 1 entsprechende Darstellung eines zweiten Ausführungsbeispiels der Erfindung,
- Fig. 3: eine perspektivische Ansicht auf den Vorderwagen des Kraftfahrzeuges von Fig. 1 und
- Fig.4: eine der Fig. 3 entsprechende Darstellung eines weiteren Ausführungsbeispiels der Erfindung.

Am Unterboden 5 eines Kraftfahrzeuges ist im Bereich vor einem Radhaus 6 mit einem Vorderrad 7 eine in ihrer Gesamtheit mit 1 bezeichnete Luftleitvorrichtung vorgesehen. Die Luftleitvorrichtung 1 setzt sich aus einem an sich bekannten Radspoiler 2 und einer erfindungsgemäßen Leitfinne 3 zusammen. Während der Radspoiler 2 etwa senkrecht zur Fahrzeuglängsrichtung (Pfeil 8) verläuft, erstreckt sich die Leitfinne 3 in Fahrzeuglängsrichtung. Die Leitfinne 3 weist einen vor dem Radspoiler 2 liegenden Abschnitt 3a und einen hinter dem Radspoiler 2 liegenden Abschnitt 3b auf, so dass die Luftleitvorrichtung 1 insgesamt T-förmig gestaltet ist. Sowohl der Radspoiler 2 als auch die Leitfinne 3 stehen etwa senkrecht vom Unterboden 5 in Richtung der Fahrbahn ab.

Durch die erfindungsgemäße Kombination von Radspoiler 2 und Leitfinne 3 erfolgt eine Kanalisierung der Luftströmung, die sich während der Fahrt des Kraftfahrzeuges einstellt und im Wesentlichen in Längsrichtung des Fahrzeuges verläuft, entsprechend dem Pfeil 8. Hierbei bewirkt vor allem der vor dem Radspoiler 2 liegende Abschnitt 3a der Leitfinne 3 eine Kanalisierung der Luftströmung. Der hinter dem Radspoiler 2 liegende Abschnitt 3b der Leitfinne 3 verbessert den Strömungsverlauf weiter.

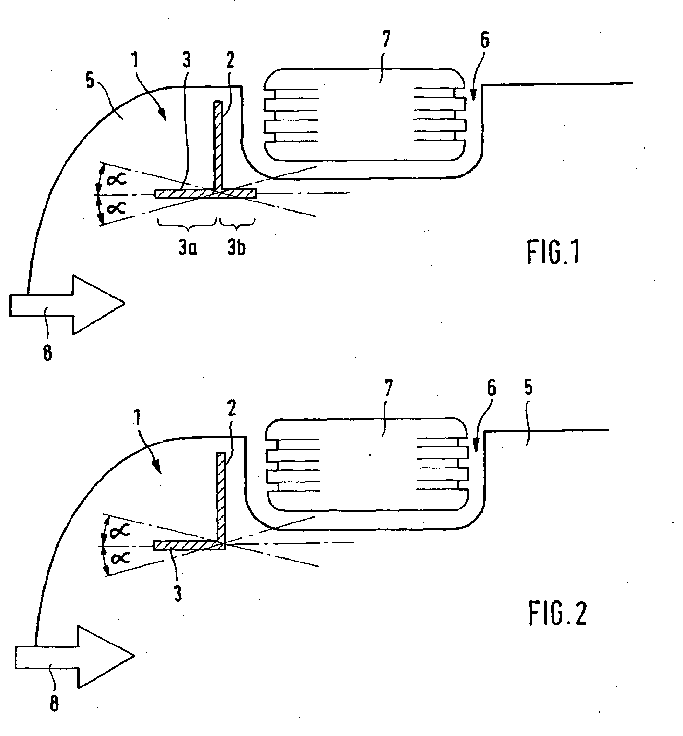

Wie in Fig. 1 dargestellt, kann die Leitfinne 3 unter einem Winkel α gegenüber der Fahrzeuglängsrichtung angestellt sein. In der Regel beträgt der Winkel α nur wenige Winkelgrade, bis zu einem maximalen Wert von α = 30°. Die fahrzeugspezifisch optimale Ausrichtung der Leitfinne 3 muss in aerodynamischen Versuchsreihen iterativ festgestellt werden.

Radspoiler 2 und/oder Leitfinne 3 können zudem vom Lot auf die Fahrbahn abweichen, je nach Ausgestaltung des Fahrzeugs und speziell des Unterbodens 5. Auch hier beträgt die Abweichung normalerweise nur wenige Winkelgrade, bis zu einem maximalen Wert von etwa 30°. Die optimale Winkelstellung von Radspoiler 2 und/oder Leitfinne 3 ist ebenfalls in mehreren aerodynamischen Optimierungsschleifen fahrzeugspezifisch zu ermitteln.

Die Leitfinne 3 kann eine nicht ebene Form aufweisen, beispielsweise in sich einfach oder mehrfach verdreht sein, eine Wellenform aufweisen, etc.

Im Ausführungsbeispiel gemäß Fig. 2, bei dem gleiche und gleichwirkende Teile mit denselben Bezugszahlen wie in Fig. 1 versehen sind, weist die Luftleitvorrichtung 1 in der Unteransicht eine L-Form auf, da sich die gesamte Leitfinne 3 vor dem Radspoiler 2 befindet.

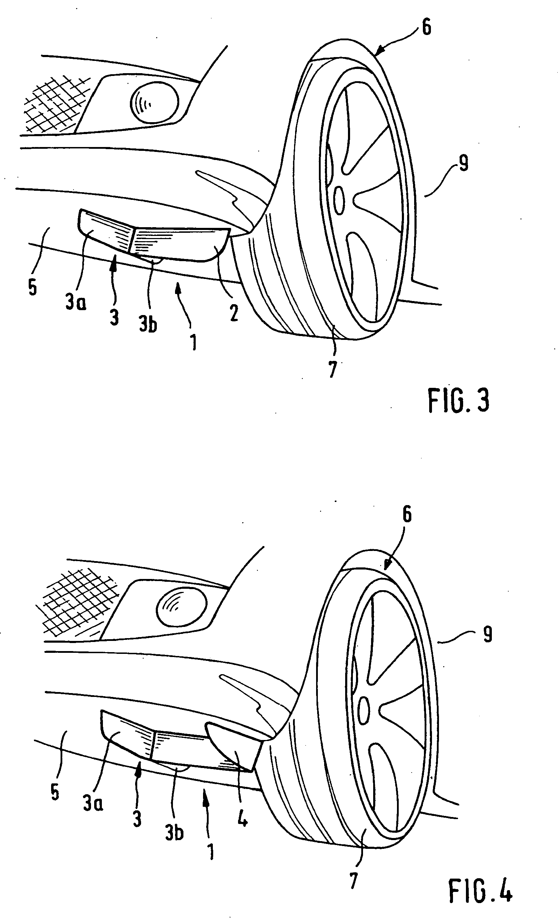

Fig. 3 zeigt das Ausführungsbeispiel von Fig. 1 in perspektivischer Ansicht. Durch die erfindungsgemäße Luftleitvorrichtung 1 wird die Umströmung des Fahrzeugs im Seitenbereich, insbesondere im Bereich eines sich an das Radhaus 6 anschließenden Kotflügels 9, optimiert, indem Luftverwirbelungen, die bei einem Radspoiler 2 entstehen, aufgrund der Kanalisierung der Luftströmung durch die Leitfinne 3 minimiert werden.

Im Ausführungsbeispiel gemäß Fig. 4 besteht die Luftleitvorrichtung 1 aus einem Radspoiler 2 sowie zwei Leitfinnen 3 und 4. Entsprechend dem Ausführungsbeispiel von Fig. 3 schließt sich die Leitfinne 3 fahrzeuginnenseitig an den Radspoiler 2 an und weist einen Abschnitt 3a vor dem Radspoiler und einem Abschnitt 3b hinter dem Radspoiler auf. Die Leitfinne 4 hingegen grenzt fahrzeugaußenseitig an den Radspoiler 2 an und erstreckt sich ausschließlich vor dem Radspoiler 2.

Selbstverständlich sind auch Ausführungen von Luftleitvorrichtungen 1 denkbar, bei denen sich lediglich an der Fahrzeugaußenseite an den Radspoiler 2 eine Leitfinne 4 anschließt, ohne eine fahrzeuginnenseitige Leitfinne 3.

Zusammenfassend lässt sich die Erfindung wie folgt beschreiben: Zur Verbesserung des Luftwiderstandsbeiwertes und zur Verringerung des Auftriebes wird vorgeschlagen, einen bekannten Radspoiler 2 durch eine Leitfinne 3 zu ergänzen, die sich etwa in Fahrzeuglängsrichtung erstreckt und sich unmittelbar an den Radspoiler 2 fahrzeuginnenseitig und/oder fahrzeugaußenseitig anschließt. Entscheidend ist hierbei, dass sich ein maßgeblicher Abschnitt 3a der Leitfinne 3 vor dem Radspoiler 2 befindet.

## Patentansprüche

1. Luftleitvorrichtung für ein Fahrzeug, mit einem Radspoiler (2), der im Bereich vor einem Fahrzeugrad in einer Ebene etwa quer zur Fahrtrichtung des Fahrzeugs angeordnet ist und vom Unterbodenbereich des Fahrzeugs nach unten in Richtung der Fahrbahn absteht, wobei die Luftleitvorrichtung eine Leitfinne (3, 4) aufweist, die an den Radspoiler (2) angrenzt und in einer etwa parallel zur Fahrtrichtung verlaufenden Vertikalebene verläuft,
**dadurch gekennzeichnet, dass** sich die Leitfinne (3; 4) zumindest teilweise in einem Bereich vor dem Radspoiler (2) erstreckt.

2. Luftleitvorrichtung nach Anspruch 1,
**dadurch gekennzeichnet, dass** derjenige Abschnitt (3a) der Leitfinne (3), der sich im Bereich vor dem Radspoiler (2) befindet, länger ist als der Abschnitt (3b) der Leitfinne (3), der sich im Bereich hinter dem Radspoiler (2) befindet.

3. Luftleitvorrichtung nach Anspruch 1,
**dadurch gekennzeichnet, dass** sich die Leitfinne (4) ausschließlich in einem Bereich vor dem Radspoiler (2) erstreckt.

4. Luftleitvorrichtung nach einem der vorgenannten Ansprüche,
**dadurch gekennzeichnet, dass** sich die Leitfinne (3; 4) an den fahrzeuginnenseitigen und/oder an den fahrzeugaußenseitigen Endabschnitt des Radspoilers (2) anschließt.

5. Luftleitvorrichtung nach einem der vorgenannten Ansprüche,
**dadurch gekennzeichnet, dass** die Leitfinne (3; 4) unter einem Winkel (α) von maximal 30 ° von der Fahrtrichtung (8) abweicht.

6. Luftleitvorrichtung nach einem der vorgenannten Ansprüche,
**dadurch gekennzeichnet, dass** die Leitfinne (3; 4) unter einem Winkel von maximal 30 ° von der Vertikalebene abweicht.

7. Luftleitvorrichtung nach einem der vorgenannten Ansprüche,
**dadurch gekennzeichnet, dass** die Leitfinne (3; 4) eine nicht ebene Form aufweist.

## Claims

1. An air-guide device for a vehicle, comprising a wheel spoiler (2) disposed in the region in front of a wheel of the vehicle and in a plane approximately at right angles to the direction of travel of the vehicle and projecting downwards towards the road away from the underbody region of the vehicle, wherein the air-guide device comprises a guide fin (3; 4) which adjoins the wheel spoiler (2) and extends in a vertical plane approximately parallel to the direction of travel, **characterised in that** the guide fin (3; 4) extends at least partly in a region in front of the wheel spoiler (2).

2. An air-guide device according to claim 1, **characterised in that** the portion (3a) of the guide fin (3) in the region in front of the wheel spoiler (2) is longer than the portion (3b) of the guide fin (3) in the region behind the wheel spoiler (2).

3. An air-guide device according to claim 1, **characterised in that** the guide fin (4) extends exclusively in a region in front of the wheel spoiler (2).

4. An air-guide device according to any of the preceding claims, **characterised in that** the guide fin (3; 4) adjoins the end portion of the wheel spoiler (2) on the inside and/or on the outside of the vehicle.

5. An air-guide device according to any of the preceding claims, **characterised in that** the guide fin (3; 4) diverges from the direction of travel (8) at an angle (α) of up to 30°.

6. An air-guide device according to any of the preceding claims, **characterised in that** the guide fin (3; 4) diverges from the vertical plane at an angle of up to 30°.

7. An air-guide device according to any of the preceding claims, **characterised in that** the guide fin (3; 4) is non-planar.

## Revendications

1. Dispositif déflecteur d'air pour un véhicule comportant un déflecteur de roue (2) installé dans la zone en amont de la roue dans un plan sensiblement transversal à la direction de circulation du véhicule et venant en saillie par rapport à la zone de plancher du véhicule, vers le bas en direction de la chaussée,
le dispositif déflecteur d'air ayant une ailette (3, 4) adjacente au déflecteur (2) et disposée dans un plan vertical sensiblement parallèle à la direction de circulation,
**caractérisé en ce que**
l'ailette (3, 4) s'étend au moins en partie dans une zone en amont du déflecteur de roue (2).

2. Dispositif déflecteur d'air selon la revendication 1,
**caractérisé en ce que**
le segment (3a) de l'ailette (3) dans la zone en amont du déflecteur de roue (2), est plus long que le segment (3b) de l'ailette (3) dans la zone en aval du déflecteur de roue (2).

3. Dispositif déflecteur d'air selon la revendication 1,
**caractérisé en ce que**
l'ailette (4) se développe exclusivement dans la zone en amont du déflecteur de roue (2).

4. Dispositif déflecteur d'air selon l'une des revendications précédentes,
**caractérisé en ce que**
l'ailette (3, 4) rejoint le segment d'extrémité du déflecteur de roue (2) du côté intérieur et/ou du côté extérieur du véhicule.

5. Dispositif déflecteur d'air selon l'une des revendications précédentes,
**caractérisé en ce que**
l'ailette (3, 4) fait un angle (α) au maximum égal à 30° par rapport à la direction de circulation (8).

6. Dispositif déflecteur d'air selon l'une des revendications précédentes,
**caractérisé en ce que**
l'ailette (3, 4) fait un angle maximum de 30° par rapport au plan vertical.

7. Dispositif déflecteur d'air selon l'une des revendications précédentes,
**caractérisé en ce que**
l'ailette (3, 4) a une forme non plane.
